# DEMANDE DE BREVET EUROPEEN

(11) **EP 4 555 855 A1**
(43) Date de publication de la demande: **21.05.2025**
(21) Numéro de dépôt: 24214367.5
(22) Date de dépôt: 20.11.2024
(51) Int. Cl.: A01J 25/11, A01J 25/12

(54) **SYSTÈME DE MOULAGE POUR LE MOULAGE DE FROMAGES**

(30) Priorité: 20.11.2023 FR 2312764
(71) Demandeur: Etablissements Chalon Megard, 01460 Montréal-la-Cluse (FR)
(72) Inventeur: DE MATTEIS, Mickael, 01460 Montréal-la-Cluse (FR)
(74) Mandataire: Alatis

(57) **Abrégé**

L'invention concerne un système de moulage de fromage (8) comportant en amont une cuve (10) apte à contenir un mélange de caillé et de sérum, et en aval une mouleuse à fromages (12), la cuve (10) et la mouleuse (12) étant reliées par un circuit de transfert (14) du mélange, caractérisé en ce que le circuit de transfert (14) du mélange traverse un dispositif de filtration (18) du mélange pour en extraire une partie du sérum et maîtriser des proportions de caillé et de sérum dans un mélange filtré transféré à la mouleuse (12).

## Description

### DOMAINE TECHNIQUE DE L'INVENTION

L'invention concerne, de façon générale, le domaine technique de l'industrie alimentaire et se rapporte en particulier à la transformation des produits laitiers, par exemple à la fabrication de fromage.

L'invention se rapporte plus spécifiquement à un système de moulage, notamment pour le moulage de fromage.

### ÉTAT DE LA TECHNIQUE ANTÉRIEURE

Du lait à l'affinage, la fabrication d'un fromage comporte un grand nombre d'étapes de transformation. L'une des premières opérations à réaliser concerne la coagulation du lait. Cette étape de coagulation peut être obtenue de différentes manière telles que par l'action d'une enzyme, i.e. la présure, ou par fermentation provoquée par des bactéries lactiques, ou encore comme c'est souvent le cas, par combinaison des deux méthodes précédentes. Ces méthodes ne sont bien entendu pas exhaustives.

On procède ensuite à l'égouttage du lait coagulé. On obtient alors le caillé et le lactosérum. Le caillé est l'élément principal qui donnera le fromage, le lactosérum est réintroduit avec le caillé en fonction du fromage voulu, ou plus rarement, peut aussi être utilisé directement.

Enfin, une opération de moulage est mise en oeuvre consistant à mouler le mélange de caillé et de lactosérum dans des moules, mélange qui est ensuite affiné dans des conditions prédéterminées en fonction du fromage souhaité.

Pour la suite, nous nous intéresserons principalement au procédé de moulage. Ce procédé est réalisé par une machine industrielle, communément appelée une mouleuse, après avoir reçu la quantité de mélange nécessaire au moulage. De telles mouleuses permettent de mouler un nombre de fromages variable en une seule opération.

Avant d'être transféré à la mouleuse, le mélange est contenu dans une cuve. Il est connu que le mélange contient plusieurs produits pouvant se décanter. Afin d'éviter toute hétérogénéité, les cuves sont continuellement brassées, ceci permettant de diminuer grandement l'hétérogénéité.

Alternativement ou en complément, il est connu de procéder au moulage d'une cuve dans un temps prédéterminé afin de minimiser, voire supprimer, toute variation d'extrait sec entre les premiers et les derniers fromages moulés à partir de ladite cuve. Des systèmes de moulage connus comportent ainsi des moyens de cadencement pour garantir une cadence de moulage suffisante pour répondre à cette problématique.

Par ailleurs, l'écart type des mouleuses est un facteur de rentabilité important pour les industriels, qui recherchent sans cesse à l'améliorer pour baisser leur prix de revient ou augmenter leur marge. Certains fromages sont également vendus à la pièce, et non au poids. Dans ce cas les fromages doivent respecter un poids minimum en-dessous duquel les formages ne peuvent pas être vendus. Par conséquent la précision de moulage est un facteur déterminant dans la maîtrise de la chaîne de fabrication des fromages. Malgré les efforts apportés par les industriels à la précision du moulage, on constate en pratique des écarts importants de poids au moulage, et en particulier au début et à la fin du moulage depuis une même cuve et à chaque changement de cuve alimentant la mouleuse.

Cependant, malgré le brassage et/ou le cadencement des mouleuses, l'homogénéité parfaite du mélange caillé/sérum n'est pas constant du fait de l'évolution des proportions caillé/sérum durant les différentes opérations de moulage, ce qui conduit à des disparités de poids ou de consistance après moulage.

### EXPOSÉ DE L'INVENTION

L'invention vise à remédier aux inconvénients de l'état de la technique et à proposer un système de moulage plus précis et permettant de de maîtriser l'écart-type des fromages ainsi moulés.

Pour ce faire est proposé, selon un premier aspect de l'invention, un système de moulage, par exemple pour le moulage de fromage, comportant en amont une cuve contenant un mélange de caillé et de sérum, et en aval une mouleuse, la cuve et la mouleuse étant reliées par un circuit de transfert du mélange, caractérisé en ce que le circuit de transfert du mélange traverse un dispositif de filtration du mélange pour en extraire une partie du sérum et maîtriser des proportions de caillé et de sérum dans un mélange filtré transféré à la mouleuse.

Grâce à une telle combinaison de caractéristiques, il est possible de filtrer le sérum par le dispositif de filtration et de rendre le mélange caillé/sérum uniforme.

Suivant un mode de réalisation, le dispositif de filtration comporte au moins une chambre de filtration configurée pour être traversée par le mélange de caillé et de sérum, une chambre de filtrat configurée pour récupérer un filtrat depuis la chambre de filtration, et une paroi filtrante entre la chambre de filtration et la chambre de filtrat. Le filtrat est composé essentiellement de sérum extrait du mélange caillé/sérum.

Suivant un mode de réalisation, le système de moulage est configuré de sorte à ce que le mélange de caillé et de sérum traverse le dispositif de filtration, de préférence traverse la chambre de filtration, de façon continue. À la différence de la mouleuse dans laquelle le mélange de caillé et de sérum circule de façon discontinue et séquencée, en fonction du remplissage des moules, le dispositif de filtration se situant en amont de la mouleuse et sur le circuit de transfert du mélange peut être traversé de façon continue par le mélange de caillé et de sérum jusqu'à alimenter la mouleuse.

Suivant un mode de réalisation, les chambres de filtration et de filtrat sont délimitées chacune par un corps tubulaire, les corps tubulaires des chambres de filtration et de filtrat étant montés de façon concentriques et coaxialement par rapport à un axe longitudinal de référence, de préférence horizontal.

Suivant un mode de réalisation, la paroi filtrante est criblée et/ou perméable. Elle peut être composée d'un ou plusieurs éléments, mobiles ou fixes, statiques ou dynamiques.

Suivant un mode de réalisation, la chambre de filtrat est raccordée à un circuit d'évacuation vers un bac d'évacuation. Ce bac d'évacuation permet de récupérer le sérum afin de le traiter par la suite.

Suivant un mode de réalisation, le système de moulage comprend des moyens de contre-pression configurés pour maintenir une contre-pression dans la chambre de filtrat de manière à ne pas colmater la paroi filtrante.

Suivant un mode de réalisation, le circuit d'évacuation comporte un syphon. Ce syphon est configuré de sorte à maintenir une contre-pression dans la chambre de filtrat de manière à s'assurer de ne pas colmater la paroi filtrante.

Suivant un mode de réalisation, le circuit d'évacuation comporte un ou plusieurs évents, notamment au point haut du syphon et/ou en haut de la ligne de caillé de manière à ne pas emprisonner de l'air. De préférence, le ou les évents sont collectés par une tuyauterie qui retombe dans un bac collecteur, pour permettre le lavage des évents après usage et le retour du produit de lavage dans le bac collecteur.

De façon plus générale, on peut prévoir une connexion à un circuit de lavage apte à alimenter le circuit d'évacuation en un liquide de lavage, ce circuit de lavage pouvant conduire à un bac collecteur tel que décrit précédemment.

Suivant un mode de réalisation, le système de moulage de fromage comporte des moyens de régulation de filtration aptes à moduler :
- une différence de pression entre la chambre de filtration et la chambre de filtrat ; et/ou
- une perméabilité de la paroi filtrante.

Suivant un mode de réalisation, les moyens de régulation de filtration comportent au moins une vanne modulante. Suivant un mode de réalisation, la vanne modulante est apte à moduler un débit de filtrat évacué de la chambre de filtrat par le circuit d'évacuation, de façon à maîtriser la différence de pression entre la chambre de filtration et la chambre de filtrat.

Suivant un mode de réalisation, le système de moulage du fromage comporte au moins un capteur de proportion caillé/sérum permettant de délivrer un signal représentatif de proportions de caillé et de sérum en aval du dispositif de filtration. Le principe de fonctionnement du turbidimètre est ici indifférent, et peut mettre en oeuvre, par exemple, des mesures optiques de réflexion diffuse ou d'absorption lumineuse, ou des mesures électriques.

Suivant un mode de réalisation, le capteur de proportion caillé/sérum est unique, au moins en aval du dispositif de filtration. Un capteur peut également être positionné en amont du dispositif de filtration pour contrôler au moins un paramètre prédéterminé du mélange en entrée du dispositif de filtration. Ce capteur aval peut comprendre par exemple un turbidimètre. Il peut permettre de contrôler le mélange dont la nature peut par exemple varier en fonction de la saisonnalité. Le dispositif de filtration peut donc être également réglé en fonction d'une information mesurée par le capteur aval.

Suivant un mode de réalisation, les moyens de régulation de filtration sont commandés en fonction du signal du capteur de proportion caillé/sérum.

Suivant un mode de réalisation, le circuit de transfert dispose d'au moins un et de préférence d'au moins deux moyens de contrôle, tels que des viseurs, placés en amont et/ou en aval du dispositif de filtration, permettant de contrôler les proportions de caillé et de sérum dans le mélange.

Suivant un mode de réalisation, le système de moulage du fromage comporte un circuit d'évents relié au circuit de transfert et/ou au dispositif de filtration.

Suivant un mode de réalisation, le système de moulage du fromage comporte un circuit de nettoyage de l'ensemble des circuits du système.

Suivant un mode de réalisation, chaque circuit comporte au moins une vanne, manuelle ou motorisée, afin de compartimenter le système de moulage de fromage si besoin, lors du nettoyage par exemple.

Suivant un mode de réalisation, le dispositif de filtration a un débit de filtration supérieur ou égal à 3 m³/h, de préférence supérieur ou égal à 6 m³/h, et/ou inférieur ou égal à 15 m³/h, de préférence inférieur ou égal 12 m³/h. De préférence encore, le dispositif de filtration est configuré pour assurer un débit de filtration sensiblement égal à 9 m³/h, le débit pouvant varier de plus ou moins 0,5 m³/h.

Suivant un mode de réalisation, le dispositif de filtration est entièrement démontable, pour une inspection ou le nettoyage par exemple.

Suivant un mode de réalisation, le dispositif de filtration comporte des pièces de raccordement interchangeables, permettant une adaptation à diverses architectures des différents systèmes de moulage de fromage.

### BRÈVE DESCRIPTION DES FIGURES

D'autres caractéristiques et avantages de l'invention ressortiront à la lecture de la description qui suit, en référence aux figures annexées, qui illustrent :
- figure 1 : un schéma de système de moulage de fromage comportant un dispositif de filtration ;
- figure 2 : une vue en coupe longitudinale et en perspective isométrique d'un dispositif de filtration selon un mode de réalisation utilisé dans le système de moulage de la figure 1 ;
- figure 3 : une vue de détail de la figure 2 ;
- figure 4 : une vue en perspective isométrique arrière du dispositif de filtration de la figure 2.

Pour plus de clarté, les éléments identiques ou similaires sont repérés par des signes de référence identiques sur l'ensemble des figures.

### DESCRIPTION DÉTAILLÉE DE MODES DE REALISATION

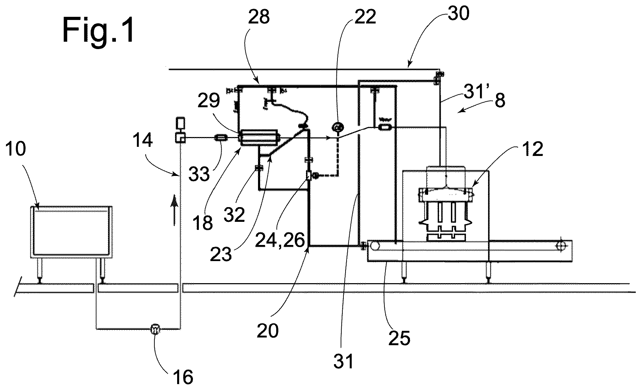

Sur la figure 1 est illustré un système de moulage **8** de fromage comportant une cuve **10** configurée pour contenir un mélange de caillé et de sérum, d'une mouleuse **12** configurée pour mouler le mélange de caillé et de sérum dans des moules et d'un circuit de transfert **14** reliant la cuve **10** à la mouleuse **12.** Durant son fonctionnement lors des opérations de moulage, le mélange de caillé et de sérum circule donc depuis la cuve **10** située en amont du circuit de transfert **14** jusqu'à la mouleuse **12** située en aval du circuit de transfert **14,** en circulant via le circuit de transfert **14.** Le système de moulage **8** ne doit pas être confondu avec la mouleuse **12** : ainsi le système de moulage **8** comprend donc la mouleuse **12** (avec la cuve **10** et le circuit de transfert **14**) mais ne constitue pas la mouleuse **12.**

La cuve **10** est ici déportée de la mouleuse **12** et peut être placée à distance. La mouleuse **12** comprend généralement un récipient recevant le mélange caillé/sérum depuis la cuve **10** via le circuit de transfert. Ce récipient de la mouleuse recevant mélange de caillé et de lactosérum peut être constitué d'une trémie, d'un bac ou d'une colonne d'alimentation (non illustré). Dans la mouleuse **12** le mélange caillé/sérum circule depuis ledit récipient de la mouleuse **12** où le mélange caillé/sérum est stagnant, jusqu'à une extrémité de remplissage configurée pour déverser le mélange caillé/sérum dans au moins un moule. Cette circulation à travers la mouleuse **12** est séquencée, ceci en fonction du remplissage des moules.

Il existe dans l'art antérieur de nombreux dispositifs de filtration intégrés à la mouleuse **12** mais toutes les solutions proposées intégrées à la mouleuse **12** sont complexes, onéreuses, difficilement réglables et la maintenance est également rendue complexe.

Conformément à l'invention, le système de moulage **8** comporte un dispositif de filtration **18** placé sur le chemin du circuit de transfert **14** de sorte que le mélange caillé/sérum circulant dans le circuit de transfert **14** depuis la cuve **10** jusqu'à la mouleuse **12** traverse le dispositif de filtration **18.** De cette manière, le dispositif de filtration **18** est distinct de la mouleuse **12** et placé sur le circuit de transfert dans lequel le mélange caillé/sérum circule en fonctionnement de façon continue jusqu'à alimenter la mouleuse **12.**

Le système de moulage **8** comporte une pompe de transfert **16** configurée pour transférer le mélange de caillé et de sérum depuis la cuve **10** principale à la mouleuse **12** par le biais du circuit de transfert **14.** Dans ce mode de réalisation, la pompe de transfert **16** est située sur le circuit de transfert **14,** directement en aval de la cuve **10** et en amont du dispositif de filtration **18.**

Le dispositif de filtration **18** permet de diminuer la quantité de sérum dans le mélange de caillé et de sérum provenant de la cuve **10** si besoin, afin que les proportions prédéterminées de caillé et de sérum du mélange transféré à la mouleuse **12** soient respectées.

Afin de mesurer les proportions de caillé et de sérum du mélange caillé/sérum, un capteur **22** de proportion caillé/sérum (ici unique) est placé directement en aval du dispositif de filtration **18,** ou plus généralement entre une sortie du dispositif de filtration **18** et la mouleuse **12.** Ce capteur **22** aval est disposé directement en aval du dispositif de filtration **18.** Dans ce mode de réalisation, le capteur 22 de proportion caillé/sérum comprend au moins un turbidimètre.

De façon optionnelle, un capteur secondaire (non illustré) peut être placé directement en amont du dispositif de filtration **18,** ou plus généralement entre une sortie de la cuve **10** et une entrée du dispositif de filtration **18.** Ce capteur secondaire peut comprend de préférence au moins un turbidimètre tel qu'un turbidimètre optique. Il peut s'agit d'un capteur identique au capteur **22** de proportion caillé/sérum.

Le système de moulage **8** de fromage comporte un circuit d'évacuation **20** comportant des moyens de régulation de filtration **24.** Le circuit d'évacuation **20** permet de créer une différence de pression au sein du dispositif de filtration **18** et ainsi générer l'extraction de l'excédent de sérum dans le mélange au sein du dispositif de filtration **18** puis de l'évacuer vers un bac d'évacuation ou récupérateur **25** situé par exemple au niveau de la mouleuse **12.**

Le sérum issu de la fabrication des fromages est précieusement récupéré pour pouvoir être valorisé. Ce sérum peut servir par exemple à l'élaboration d'autres fromages tels que des fromages de lactosérum. L'industrie du lactosérum s'est également considérablement développée ces dernières décennies de sorte que les progrès de la technologie en industrie agroalimentaire ont permis de résoudre les problèmes de valorisation du lactosérum en permettant l'extraction des protéines qu'il contient. Le sérum peut ainsi permettre la fabrication de poudre de lactosérum, de protéines de lactosérum, de fractions de protéines de lactosérum, de lactose tel que du lactose pharmaceutique, de perméats de lait ou encore de dérivés du lactose.

Le circuit d'évacuation **20** récupère l'excédent de sérum par un piquage **21** dans le dispositif de filtration **18.** Ce piquage **21** consiste à un raccordement d'une conduite du circuit d'évacuation **20** dans le dispositif de filtration **18,** de préférence au niveau d'un point bas verticalement du dispositif de filtration **18** formant une évacuation gravitaire du sérum liquide.

On notera dans ce mode de réalisation la présence de trois interfaces de piquages situées verticalement sous le dispositif de filtration **18,** en particulier sous une chambre de chambre de filtrat **36** cylindrique. Dans ce mode de réalisation, un seul piquage est réalisé pour le relier au circuit d'évacuation **20.** Une telle configuration permet de prévoir la possibilité d'assurer plusieurs piquages ou raccordements au circuit d'évacuation **20** en fonction du débit souhaité. Ce piquage **21** s'étend radialement par rapport à la chambre de filtrat **36** cylindrique du dispositif de filtration **18** et s'étend en outre localement verticalement.

Le système de moulage **8** est commandé par une unité de contrôle (non illustrée) ou automate pour contrôler notamment la filtration du mélange caillé/sérum par le dispositif de filtration **18.** En particulier, le capteur **22** de proportion caillé/sérum (de préférence unique capteur aval de proportion caillé/sérum) est relié aux moyens de régulation de filtration **24** et est apte à délivrer un signal aux moyens de régulation de filtration **24** dépendant des proportions de caillé et de sérum dans le mélange filtré. Dans le cas d'un capteur secondaire amont, de préférence unique capteur amont, ce capteur secondaire peut être aussi relié aux moyens de régulation de filtration **24** et est apte à délivrer un signal aux moyens de régulation de filtration **24** dépendant de l'information mesurée.

De manière générale, l'unité de contrôle est dédiée au pilotage du système de moulage **8,** laquelle unité de contrôle est intégrée et communique avec une unité de contrôle de la mouleuse **12.** Dans une configuration préférée, l'unité de contrôle est configurée pour contrôler au moins à intervalle régulier, de préférence en continue, les valeurs mesurées par le capteur **22** de proportion caillé/sérum de sorte à ajuster des paramètres prédéterminés de la mouleuse **12** en direct, c'est-à-dire de façon immédiate ou sans délai. Ces paramètres prédéterminés peuvent être par exemple le volume de la chambre de moulage dans la mouleuse, appelée communément « conformateur », la cadence et/ou le débit des moyens de régulation de filtration **24.** Dans le cas du volume du conformateur, celui-ci peut être commandé au moyen d'une motorisation telle qu'un moteur ou motoréducteur sans balais, appelé en termes anglosaxons « brushless ».

Les moyens de régulation de filtration **24** comportent par exemple au moins une vanne modulante **26** qui permet par son action de contrôler la quantité de sérum évacuée par le circuit d'évacuation **20.** En d'autres termes, grâce au capteur **22** de proportion caillé/sérum, il est possible de piloter la vanne modulante **26,** ici une vanne de régulation à membrane, qui permet de sortir du dispositif de filtration **18,** et plus généralement du circuit de transfert **14,** un débit nécessaire de sérum afin d'avoir en entrée de la mouleuse **12** un mélange caillé/sérum homogène suivant une consigne entrée dans l'automate ou unité de contrôle associée.

Le circuit d'évacuation **20** comporte un syphon **23** situé à proximité du piquage **21.** En particulier, la conduite du circuit d'évacuation **20** raccordée au dispositif de filtration **18** présente localement un coude en forme de « U » inversé formant syphon **23.** Le syphon **23** est situé à un niveau verticalement au-dessus du dispositif de filtration **18** correspondant à une hauteur prédéterminée. De préférence, la hauteur du syphon **23** est réglable. Le syphon **23** permet, en association avec les moyens de régulation de filtration **24,** de maintenir une contre-pression dans le dispositif de filtration **18** de manière à éviter que le caillé ne vienne colmater ledit dispositif de filtration **18.** De préférence, le circuit d'évacuation **20** est configuré de sorte que la hauteur du syphon **23** est variable. En effet, plusieurs paramètres extérieurs au système de moulage **8** sont susceptibles de modifier sensiblement la nature du lait utilisé. C'est notamment le cas en fonction des saisons (température extérieur, taux d'humidité, etc.). Il en résulte que le lait peut être de natures différentes, par exemple plus ou moins sec ou plus ou moins collant en fonction de la saisonnalité, des matières protéiques et des matières grasses composant le lait. Par exemple, la hauteur du syphon **23** pourra être à une hauteur basse lorsque l'environnement sera sec ; ou à une hauteur plus importante en fonction de la saisonnalité. La hauteur du syphon **23** permet ainsi d'influer sur le résultat de la filtration car elle permet une certaine maîtrise du colmatage de la paroi filtrante, et par conséquent permet de faire varier le débit.

La conduite du circuit d'évacuation **20** étant, d'une part raccordée au dispositif de filtration **18** au niveau d'un point bas verticalement du dispositif de filtration **18** formant une évacuation gravitaire du sérum liquide, et d'autre part présentant un syphon situé à un niveau verticalement au-dessus du dispositif de filtration **18,** ladite conduite du circuit d'évacuation **20** comprend un coude inférieur **23'** en forme de « U » situé entre ledit raccordement et le syphon **23.** Ce coude inférieur présente un raccordement amovible de deux portions de conduites de sorte à permettre un démontage facile, voire permettre une maintenance de la conduite en cas de résidus pouvant rester localement bloqués dans ce coude inférieur **23'.**

Dans le cas où plusieurs piquages **21** sont réalisés par le circuit d'évacuation **20** avec le dispositif de filtration **18** et en particulier avec la chambre de filtrat **36,** chaque piquage **21** est relié à un syphon **23,** commun aux différents piquages ou distincts, montés dans ce cas en parallèle, et présentant chacun des caractéristiques similaires au syphon **23** décrit en référence aux figures.

La vanne modulante **26** formant moyen de régulation de filtration **24** est reliée à la conduite du circuit d'évacuation **20** raccordée au dispositif de filtration **18** par l'intermédiaire du piquage **21.** Le coude inférieur **23'** et le syphon **23** se situent entre le piquage **21** et les moyens de régulation de filtration **24,** en particulier ici la vanne modulante **26.** En d'autres termes, la vanne modulante **26** se trouve à la sortie du syphon **23** qui est pilotée par le turbidimètre **22.** De cette manière, le débit du sérum est modulé de manière à avoir un mélange uniforme à la sortie du dispositif de filtration **18.**

Dans ce mode de réalisation, le système de moulage **8** de fromage comporte également un circuit d'aération **28** et de maintenance. Le circuit d'aération **28** et de maintenance est configuré pour faire circuler un fluide tel qu'un gaz, par exemple de l'air au sein du dispositif de filtration **18** par le biais d'évents **29.** En particulier ici, le circuit d'aération **28** et de maintenance permet de faire circuler de l'air aussi au sein du circuit de transfert **14** et du circuit d'évacuation **20.** Alternativement à l'air, il pourrait être utilisé d'autres gaz neutres compatibles avec une utilisation alimentaire.

Des évents **29** sont montés sur chacun des flasque amont et aval **27A, 27B** du dispositif de filtration **18,** débouchant à l'intérieur de la chambre de filtrat **36,** en haut du syphon **23** et en aval du capteur **22** par rapport au circuit de transfert **14** de manière à ne pas emprisonner de l'air (voir le circuit d'aération **28** sur la figure 1 reliant chacun des évents **29**). Les évents **29** sont collectés par une tuyauterie du circuit d'aération **28** qui débouche vers un bac de récupération de la mouleuse **12,** car ces évents **29** doivent être lavé après usage et le retour du produit de lavage est collecté par le bac de la mouleuse **12** qui reprends des produits de lavage.

Un circuit de lavage **30** équipe également le système de moulage **8.** Le circuit de lavage **30** est relié à tout ou partie du ou des circuit(s) de transfert **14,** de filtration **20** et/ou d'aération **28** afin d'y faire circuler un liquide de lavage. Une telle opération de lavage peut être menée à une fréquence prédéterminée. En particulier, l'unité de commande de la mouleuse **12** est configurée de sorte à assurer une phase de lavage répétée à intervalles prédéfinis de la mouleuse **12,** de préférence de la mouleuse **12** et du dispositif de filtration **18** de manière concomitante.

Une ligne de lavage **31** du circuit de lavage **30** dédiée au lavage du dispositif de filtration **18** (voir la figure 1) est positionnée de sorte à être connectée entre, d'une part, une ligne de lavage **31'** existante de la mouleuse **12,** et d'autre part une ligne du circuit d'évacuation **20.** Ce système de nettoyage permet de laver le dispositif de filtration **18** à contre-courant.

De préférence, tout ou partie des circuits de transfert **14,** de filtration **20,** d'aération **28,** et de lavage **30** comportent des vannes manuelles **32** afin de permettre à un opérateur de pouvoir intervenir rapidement et facilement sur le circuit associé.

Des viseurs **33** permettent à un opérateur de contrôler rapidement l'aspect du mélange de caillé et de sérum en amont et/ou en aval du dispositif de filtration **18,** ou plus généralement sur le parcours du circuit de transfert **14.**

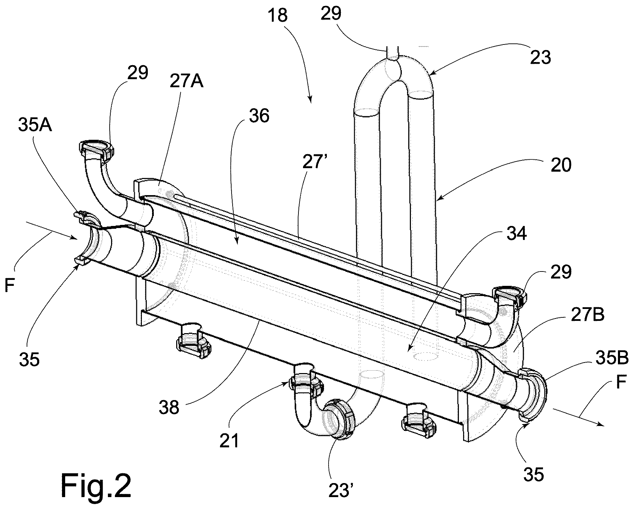

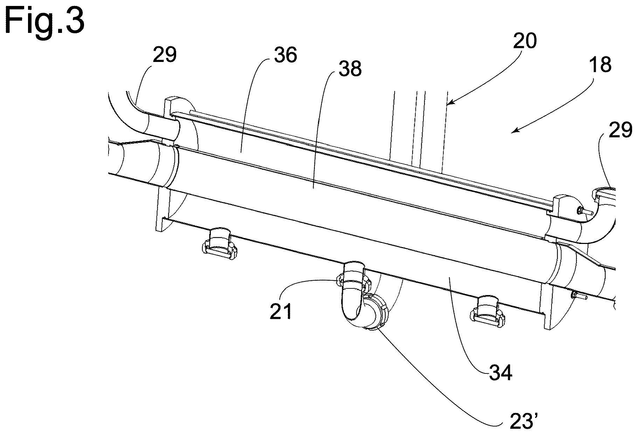

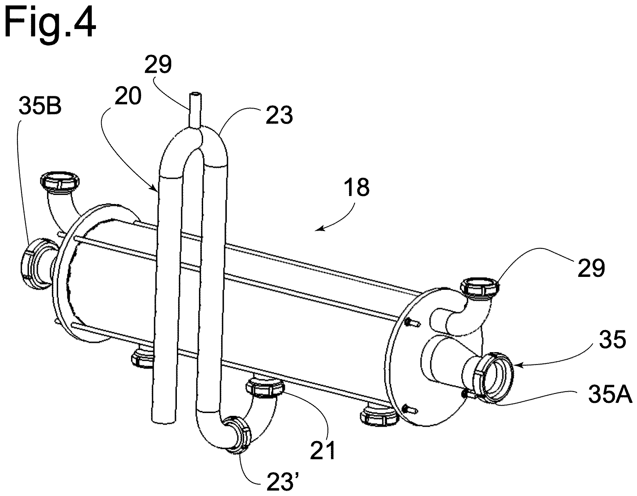

En référence aux figures 2 à 4 est illustré un exemple de réalisation d'un dispositif de filtration **18.**

Le dispositif de filtration **18** comporte une chambre de filtration **34** reliée de part et d'autre au circuit de transfert **14** par des raccords de liaison **35,** en particulier un raccord de liaison amont **35A** et un raccord de liaison aval **35B.** Lors de son utilisation, la chambre de filtration **34** est ainsi traversée par le mélange de caillé et de sérum depuis une entrée située au niveau du raccord de liaison amont **35A** où le mélange entre non filtré jusqu'à une sortie du mélange filtré située au niveau du raccord de liaison aval **35B.** Le sens de circulation du mélange caillé/sérum est illustré par des flèches **F** sur la figure 2.

La chambre de filtration **34** est contenue dans une chambre de filtrat **36** qui entoure ladite chambre de filtration **34.** La chambre de filtration **34** s'étend de part en part de ladite chambre de filtrat **36** en la traversant, de préférence horizontalement. Cette chambre de filtration **34** est ici de forme cylindrique, et elle-même contenue dans la chambre de filtrat **36,** ces deux chambres **34, 36** s'étendant coaxialement. En pratique, chacune de ces chambres est délimité par un corps tubulaires montés de façon concentriques et coaxialement par rapport à un axe longitudinal de référence, de préférence horizontal. Chacun de ces corps tubulaires sont reliés à leurs extrémités amont et aval par un flasque amont **27A** et un flasque aval **27B.** De cette manière, le flasque amont **27A** assure une liaison rigide entre les deux corps tubulaires des chambres **34, 36** et le flasque aval **27B** assure une liaison rigide entre les deux corps tubulaires des chambres **34, 36.** Ces deux flasques **27A** et **27B** sont reliés ensemble par des tirants **27'** de bridage s'étendant parallèlement à l'axe longitudinal de référence répartis de manière homogène autour et à l'extérieur des chambres **34, 36.** Ces flasques forment également des supports à des interfaces de raccordements, tels que des évents **29** et des raccords de liaison amont **35A** et aval **35B.**

La chambre de filtration **34** et la chambre de filtrat **36** sont séparées par une paroi filtrante **38** délimitant la surface cylindrique de la chambre de filtration **34.** La paroi filtrante **38** peut être criblée ou perméable, et de différentes matières.

Le fonctionnement du système de moulage **8** sera mieux compris à la lecture de la description ci-après.

Le mélange de caillé et de sérum, brassé dans la cuve **10,** est transféré depuis la cuve **10** à la mouleuse **12** par le circuit de transfert **14** à l'aide de la pompe de transfert **16.** Lors du transfert du mélange de caillé et de sérum à travers le circuit de transfert **14,** le mélange caillé/sérum traverse le dispositif de filtration **18** puis traverse une portion du circuit de transfert **14** contrôlée par le capteur **22** de proportion caillé/sérum placé en sortie du dispositif de filtration **18.**

Si le capteur **22** de proportion caillé/sérum mesure une proportion trop élevée de sérum dans le mélange filtré à la sortie du dispositif de filtration **18,** il transmet une commande d'ouverture pour ouvrir, ou ouvrir davantage, la vanne modulante **26,** ce qui permet au circuit d'évacuation **20** d'évacuer le filtrat formé de sérum vers le bac d'évacuation **25,** et de diminuer la pression dans le circuit d'évacuation **20** en amont de la vanne modulante **26,** et dans la chambre de filtrat **36.** Une différence de pression s'établit ou augmente entre la chambre de filtration **34** et la chambre de filtrat **36,** qui établit ou augmente le flux au travers de la paroi filtrante **38,** et diminue ainsi la proportion de sérum dans le mélange filtré à la sortie de la chambre de filtration **34** et du dispositif de filtration **18.**

Lors que le capteur **22** de proportion caillé/sérum mesure une proportion de sérum inférieure à un seuil prédéterminé, le capteur **22** de proportion caillé/sérum transmet une commande de fermeture pour fermer la vanne modulante **26,** ou la fermer davantage.

Le système de moulage **8** de fromage permet donc de moduler le débit de sérum évacué de manière à avoir un mélange filtré homogène à la sortie du dispositif de filtration **18.** En d'autres termes, grâce au capteur **22** de proportion caillé/sérum il est possible de piloter une vanne modulante **26,** ici une vanne de régulation à membrane, qui permet de sortir le débit nécessaire de sérum afin d'avoir en entrée de la mélangeuse **12** un mélange caillé/sérum homogène suivant une consigne rentrée dans l'automate.

Le capteur **22** de proportion caillé/sérum situé en aval du dispositif de filtration **18** par rapport au circuit de transfert permet d'assurer un asservissement de la valeur de proportions prédéterminées par l'unité de contrôle. Grâce au fonctionnement du système de moulage **8,** les proportions de caillé et de sérum du mélange filtré se rééquilibrent ainsi autour d'une valeur prédéterminée tendant à obtenir un mélange caillé/sérum homogène pour le moulage.

Comme illustré sur la figure 2, le dispositif de filtration **18** comporte des évents **29** lui permettant d'être relié au circuit d'aération **28.**

Suivant une variante, le dispositif de filtration **18** comporte au moins un piquage **21.**

Le dispositif de filtration **18** est de taille variable selon les besoins. Par ailleurs, les raccords de liaison **35** formant entrée et sortie du dispositif de filtration **18** peuvent être de dimensions standards, voire normées, de sorte que ledit dispositif de filtration **18** est adaptable à la plupart des systèmes de moulage **8** de fromage existants.

Le dispositif de filtration **18** a un débit de filtration supérieur ou égal à 3m³/h, de préférence supérieur ou égal à 6 m³/h, et/ou inférieur ou égal à 15 m³/h, de préférence inférieur ou égal à 12 m³/h. On choisira de préférence des dimensions du dispositif de filtration **18** en fonction du débit de moulage de la mouleuse **12** visé. Par exemple dans ce mode de réalisation, une longueur du dispositif de filtration **18,** correspondant à une longueur axiale de la chambre de filtration **34** mais aussi à une longueur axiale de la chambre de filtrat **36** et de la paroi filtrante **38,** est égale à 950mm, pour un débit de moulage de la mouleuse **12** de 9m³/h.

L'invention permet ainsi un désérumage en ligne mis en oeuvre par un dispositif de filtration **18** fiable et précis, permettant en outre de maîtriser des proportions de caillé et de sérum dans le mélange filtré qui est transféré à la mouleuse.

Selon un mode de réalisation, le dispositif de filtration **18** est amovible. Le dispositif de filtration **18** étant situé en amont de la mouleuse, et placé sur le circuit de transfert depuis la cuve 10 principale vers la mouleuse **12,** il est facile de pouvoir installer un tel dispositif de filtration **18** autant sur de nouvelles installations que sur des installations existantes, sans avoir à intervenir sur la mouleuse. Le dispositif de filtration **18** selon l'invention est donc complémentaire de la mouleuse **12** et peut se greffer sur tout type de mouleuse **12** ou plus généralement tout type de machine de moulage.

Le dispositif de filtration **18** est ainsi indépendant de la mouleuse **12.**

Le dispositif de filtration **18** permet ainsi d'obtenir un mélange uniforme (caillé/sérum) en sortie dudit dispositif de filtration **18** et en amont de la mouleuse **12,** avant même que le mélange caillé/sérum soit versé dans le récipient de la mouleuse **12** recevant mélange de caillé et de lactosérum.

Naturellement, les exemples représentés sur les figures et discutés cidessus ne sont donnés qu'à titre illustratif et non limitatif. Il est explicitement prévu que l'on puisse combiner entre eux les différents modes de réalisation illustrés pour en proposer d'autres.

Suivant une variante non illustrée, le système de moulage **8** de fromage peut injecter une partie du sérum filtré dans le circuit de transfert **14** afin de rééquilibrer les proportions du mélange caillé/sérum si le caillé est présent en trop grande proportion.

Suivant une autre variante, le dispositif de filtration **18** comporte une chambre de filtration **34** traversée par le mélange caillé/sérum, une chambre de filtrat **36** et une paroi filtrante **38** à porosité variable interposée entre la chambre de filtration **34** et la chambre de filtrat **36.** La variation de porosité peut être obtenue, par exemple, en faisant varier un positionnement relatif de deux grilles perforées de sorte à faire varier l'alignement des perforations des deux grilles et, ainsi, la section de passage au travers de la paroi filtrante **38.** Une commande permet de piloter le positionnement relatif des deux grilles en fonction des mesures de la proportion de caillé et de sérum du mélange filtré par le capteur **22** de proportion caillé/sérum. Cette variante nécessite toutefois des dispositions spécifiques pour éviter le colmatage de la paroi filtrante.

Le système de moulage **8** selon l'invention muni d'un tel dispositif de filtration **18** permet offre donc un grand nombre d'avantages, et permet en particulier :
- d'uniformiser un mélange caillé/sérum en amont de la mouleuse **12** procédant aux opérations de moulage ;
- à la mouleuse **12** d'avoir toujours le même ratio caillé/sérum à traiter ;
- de réduire largement l'écart-type sur les fromages moulés car la mouleuse **12** traite toujours le même ratio caillé/sérum ;
- pour le fromager, d'affiner de manière très précise et régulière le poids de son fromage et de limiter ainsi la perte liée à un poids excessif du fromage ;
- d'uniformiser l'extrait sec du fromage (uniformisation des fromages) en termes de texture ;
- de pouvoir adapter un tel dispositif de filtration **18** sur des appareillages existant et donc de pouvoir adapter l'invention sur des chaînes de moulage existantes, permettant un rétrofit sans modification majeur ;
- de proposer une solution autolavable ;
- d'être entièrement amovible et démontable pour procéder facilement à des opérations d'inspection, de maintenance et/ou de nettoyage ;
- d'être court-circuité facilement en cas de besoin,
- de piloter la ligne quelle que soit la saison, le lait variant en fonction des saisons en étant plus ou moins gras.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Système de moulage (8), par exemple pour le moulage de fromage comportant en amont une cuve (10) apte à contenir un mélange de caillé et de sérum, et en aval une mouleuse (12), la cuve (10) et la mouleuse (12) étant reliées par un circuit de transfert (14) du mélange, **caractérisé en ce que** le circuit de transfert (14) du mélange traverse un dispositif de filtration (18) du mélange pour en extraire une partie du sérum et maîtriser des proportions de caillé et de sérum dans un mélange filtré transféré à la mouleuse (12).

2. Système de moulage (8) selon la revendication 1, **caractérisé en ce qu'**il est configuré de sorte à ce que le mélange de caillé et de sérum traverse le dispositif de filtration (18) de façon continue.

3. Système de moulage (8) selon la revendication 1 ou 2, **caractérisé en ce que** le dispositif de filtration (18) comporte au moins une chambre de filtration (34) configurée pour être traversée par le mélange de caillé et de sérum, une chambre de filtrat (36) configurée pour récupérer un filtrat depuis la chambre de filtration (34), et une paroi filtrante (38) entre la chambre de filtration (34) et la chambre de filtrat (36).

4. Système de moulage (8) selon la revendication 3, **caractérisé en ce que** les chambres de filtration (34) et de filtrat (36) sont délimitées chacune par un corps tubulaire, les corps tubulaires des chambres de filtration (34) et de filtrat (36) étant montés de façon concentriques et coaxialement par rapport à un axe longitudinal de référence, de préférence horizontal.

5. Système de moulage (8) selon la revendication 3 ou 4, **caractérisé en ce que** la paroi filtrante (38) est criblée et/ou perméable.

6. Système de moulage (8) selon l'une quelconque des revendications 3 à 5, **caractérisé en ce que** la chambre de filtrat (36) est raccordée à un circuit d'évacuation (20) vers un bac d'évacuation.

7. Système de moulage (8) selon la revendication 6, **caractérisé en ce que** le circuit d'évacuation (20) comporte :
- un syphon (23) ; et/ou
- au moins un évent (29) ; et/ou
- une connexion à un circuit de lavage (30) apte à alimenter le circuit d'évacuation (20) en un liquide de lavage.

8. Système de moulage (8) l'une quelconque des revendications précédentes, dépendant au moins de la revendication 3, **caractérisé en ce qu'**il comporte des moyens de régulation de filtration (24) configurés pour moduler :
- une différence de pression entre la chambre de filtration (34) et la chambre de filtrat (36) ; et/ou
- une perméabilité de la paroi filtrante (38).

9. Système de moulage (8) selon la revendication 8, **caractérisé en ce que** les moyens de régulation de filtration (24) comportent au moins une vanne modulante (26).

10. Système de moulage selon la revendication 9 en combinaison avec la revendication 4, **caractérisé en ce que** la vanne modulante (26) est configurée pour moduler un débit de filtrat évacué de la chambre de filtrat (36) par le circuit d'évacuation (20).

11. Système de moulage (8) selon l'une quelconque des revendications précédentes, **caractérisé en ce qu'**il comporte au moins un capteur (22) de proportion caillé/sérum, comportant de préférence un turbidimètre, permettant de délivrer un signal représentatif de proportions de caillé et de sérum en aval du dispositif de filtration (18).

12. Système de moulage (8) selon la revendication 11 en combinaison avec l'une quelconque des revendications 8 à 10, **caractérisé en ce que** les moyens de régulation de filtration (24) sont commandés en fonction du signal du capteur (22) de proportion caillé/sérum.

13. Système de moulage (8) selon l'une quelconque des revendications précédentes, **caractérisé en ce qu'**il comporte un circuit d'aération (28) relié au circuit de transfert (14) et/ou au dispositif de filtration (18) par au moins un évent (29).
